# EUROPÄISCHE PATENTANMELDUNG

(11) **EP 3 296 933 A1**
(43) Veröffentlichungstag der Anmeldung: **21.03.2018**
(21) Anmeldenummer: 17188567.6
(22) Anmeldetag: 30.08.2017
(51) Int. Cl.: G06Q 10/00, G01M 11/08

(54) **VERFAHREN FÜR EINE DATENVERARBEITUNGSANLAGE ZUR ERHALTUNG EINES BETRIEBSZUSTANDS EINES ERSTEN AUTONOMEN FAHRZEUGS SOWIE VERFAHREN FÜR EINE DATENVERARBEITUNGSANLAGE ZUM VERWALTEN EINER MEHRZAHL AUTONOMER FAHRZEUGE**

(30) Priorität: 20.09.2016 DE 102016218012
(71) Anmelder: VOLKSWAGEN AKTIENGESELLSCHAFT, 38440 Wolfsburg (DE)
(72) Erfinder: Rech, Dr. Bernd, 38556 Bokensdorf (DE); Gläser, Dr. Stefan, 38104 Braunschweig (DE); Engel, Monique, 38110 Braunschweig (DE); Günther, Hendrik-Jörn, 30173 Hannover (DE); Buburuzan, Dr. Teodor, 38118 Braunschweig (DE); Kleinau, Sandra, 38531 Rötgesbüttel (DE); Lehmann, Bernd, 38444 Wolfsburg (DE); Hartog, Johannes, 38102 Braunschweig (DE)

(57) **Zusammenfassung**

Bereitgestellt wird ein Verfahren für eine Datenverarbeitungsanlage zur Erhaltung eines Betriebszustands eines ersten autonomen Fahrzeugs. Das Verfahren beinhaltet ein Bestimmen eines momentanen Zustands des ersten autonomen Fahrzeugs aus einem empfangenen Messwert eines Sensors eines zweiten Fahrzeugs. Wenn der momentane Zustand des ersten autonomen Fahrzeugs von einem Sollzustand abweicht, beinhaltet das Verfahren ferner ein Senden einer ersten Nachricht an das erste autonome Fahrzeug, wobei die erste Nachricht einen Befehl enthält, sich autonom zu einem Service-Ort zu bewegen. Alternativ beinhaltet das Verfahren ein Senden einer zweiten Nachricht an einen Verantwortlichen für das erste autonome Fahrzeug, wobei die zweite Nachricht Informationen über die Abweichung des momentanen Zustands des ersten autonomen Fahrzeugs von dem Sollzustand umfasst. Weiter alternative beinhaltet das Verfahren ein Senden einer dritten Nachricht an eine Servicekraft, wobei die dritte Nachricht einen Auftrag an die Servicekraft enthält, das Fahrzeug in den Sollzustand zu versetzten.

## Beschreibung

Die vorliegende Erfindung betrifft den Erhalt eines Betriebszustands eines Fahrzeugs. Insbesondere betrifft die vorliegende Erfindung ein Verfahren für eine Datenverarbeitungsanlage zur Erhaltung eines Betriebszustands eines ersten autonomen Fahrzeugs. Ferner betrifft die vorliegende Erfindung ein Verfahren für eine Datenverarbeitungsanlage zum Verwalten einer Mehrzahl autonomer Fahrzeuge.

Ein Fahrzeug ist ein mobiles Verkehrsmittel für den Transport von Personen oder Gütern. Bei dem Fahrzeug kann es sich daher sowohl um ein Personen- als auch um ein Nutzfahrzeug handeln. Zum Beispiel kann ein Fahrzeug ein Personenkraftwagen, ein Lastkraftwagen, ein Motorrad oder ein Traktor sein. Allgemein kann ein Fahrzeug als eine Vorrichtung aufgefasst werden, die einen Motor, ein Antriebsstrangsystem sowie Räder umfasst.

Fahrzeuge eines Sharing-Verbundes werden von wechselnden Benutzern genutzt. Ein Fahrzeug eines Sharing-Verbundes wird nach der Nutzung durch den Nutzer im öffentlichen Raum abgestellt und steht anschließend weiteren Nutzern zur Verfügung.

Mit Fortschreiten des autonomen Fahrens, d.h. das Fahrzeug bewegt sich autonom im öffentlichen Straßenverkehr, werden zukünftig auch fahrerlose Taxis bzw. Mietfahrzeuge am öffentlichen Straßenverkehr teilnehmen.

Dabei kann es vorkommen, dass die Fahrzeuge z.B. verschmutzt oder beschädigt werden bzw. einzelne Bauteile des Fahrzeugs verschleißen. Dies kann so weit gehen, dass das Fahrzeug nicht mehr dem Qualitätsanspruch eines Anbieters des Fahrzeugs genügt. Bisher wurden Taxis vom Fahrzeugführer und Mietfahrzeuge von Servicepersonal an Mietstationen gesäubert bzw. gewartet. Bei autonom fahrenden Fahrzeugen gibt es jedoch keinen Taxifahrer bzw. nur sehr wenige Mietstationen mit Service-Personal. Service-Stationen eines Anbieters können daher von einem momentanen Aufenthaltsort des Fahrzeugs relativ weit entfernt sein, so dass sich lange Anfahrtswege bzw. Anfahrtszeiten zu einer Service-Station ergeben können. Während dieser Zeiten kann das Fahrzeug nicht durch Benutzer genutzt werden.

In Druckschrift US 2009/0231429 A1 wird ein Verfahren vorgeschlagen, bei dem im Fahrzeug eine Aufnahme mit gespeicherten Aufnahmen verglichen wird und der Fahrer bei Erkennen eines Problems benachrichtigt wird. Dabei müssen jedoch in teilnehmenden Fahrzeugen entsprechende Auswertekapazitäten vorgehalten werden. Somit ist der Druckschrift US 2009/0231429 A1 keine Lösung zur effizienten Aufrechterhaltung eines Betriebszustandes eines Fahrzeugs zu entnehmen.

Druckschrift US 2015/0348335 A1 schlägt ein Verfahren vor, bei dem ein Fahrzeug erkennt, dass ein Service nötig ist, und sich selbständig zu einem Service-Zentrum bewegt. Auch hier müssen in den Fahrzeugen wiederum entsprechende Auswertekapazitäten vorgehalten werden. Somit ist auch der Druckschrift US 2015/0348335 A1 keine Lösung zur effizienten Aufrechterhaltung eines Betriebszustandes eines Fahrzeugs zu entnehmen.

In Druckschrift US 2014/0052312 A1 wird ein Verfahren zum autonomen Fahren in einer Autowaschanlage vorgeschlagen. Auch der Druckschrift US 2014/0052312 A1 ist aber keine Lösung zur effizienten Aufrechterhaltung eines Betriebszustandes eines Fahrzeugs zu entnehmen.

Druckschrift DE 10 2014 224 792 A1 schlägt ein Verfahren zur Erkennung von Fahrzeugschäden vor. Dabei scannt ein erstes Fahrzeug ein zweites Fahrzeug und erkennt einen Defekt an dem zweiten Fahrzeug. Die Auswertung des Scans erfolgt dabei im ersten Fahrzeug. Somit müssen in teilnehmenden Fahrzeugen entsprechende Auswertekapazitäten vorgehalten werden. Der Druckschrift DE 10 2014 224 792 A1 ist daher keine Lösung zur effizienten Aufrechterhaltung eines Betriebszustandes eines Fahrzeugs zu entnehmen.

Es besteht somit ein Erfordernis, eine Möglichkeit bereitzustellen, einen Betriebszustand eines autonomen Fahrzeugs möglichst effizient, d.h. zeit- und kostengünstig, aufrechtzuerhalten.

Die vorliegende Erfindung ermöglicht dies durch ein Verfahren für eine zentrale Datenverarbeitungsanlage zur Erhaltung eines Betriebszustands eines ersten autonomen Fahrzeugs. Dabei umfasst das Verfahren ein Bestimmen eines momentanen Fahrzeugzustands des ersten autonomen Fahrzeugs aus einem empfangenen Messwert eines Sensors eines zweiten Fahrzeugs. Beispielsweise kann es sich bei dem Messwert des Sensors um eine Aufnahme einer Kamera handeln. Somit kann z.B. eine im bzw. am zweiten Fahrzeug angebrachte Kamera (zur Aufnahme statischer oder bewegter Bilder) genutzt werden. Damit können Aufnahme des Außenraums und/oder des Innenraums des ersten autonomen Fahrzeugs gemacht werden. Der Messwert kann z.B. mittels zellularer Kommunikation oder mittels eines lokalen drahtlosen Netzwerks (z.B. gemäß dem Standard IEEE 802.11 des Institute of Electrical and Electronics Engineers, insbesondere des Standards IEEE 802.11 p für die Kommunikation zwischen dem zweiten Fahrzeug und einer Verkehrsinfrastruktur - wie etwa einer Lichtsignalanlage) von dem zweiten Fahrzeug an die Datenverarbeitungsanlage gesendet werden. Mittels automatisierter (d.h. computergestützter) Auswertung der Aufnahme kann ein momentaner Fahrzeugzustand bestimmt werden. Dazu können beispielsweise bekannte Bilderkennungsverfahren eingesetzt werden. So kann z.B. bestimmt werden, ob das erste autonome Fahrzeug innen oder außen verschmutzt bzw. verdreckt ist. Auch können auf diese Weise Beschädigungen am Fahrzeug (z.B. Sprung in der Windschutzscheibe, Beulen in der Verkleidung, Kratzer im Lack) erkannt werden. Der Messwert ist jedoch nicht auf Aufnahmen einer Kamera beschränkt. Vielmehr kann der Messwert der Wert einer beliebigen Messgröße, die von einem Messgerät oder einer Messeinrichtung (z.B. Ultraschallsensor, Laserscanner, Radar) im bzw. am zweiten Fahrzeug geliefert wird, sein. Durch die zentrale Auswertung muss nur Rechenleistung in Form der Datenverarbeitungsanlage vorgehalten werden. In den Fahrzeugen selbst muss keine weitere Rechenleistung für die Auswertung der Messwerte des Sensors vorgehalten werden. Zudem reicht es aus z.B. Aktualisierungen einer Software zur Auswertung des Messwerts, d.h. einer Software zur Bestimmung des momentanen Zustands des ersten autonomen Fahrzeugs, nur zentral auf der Datenverarbeitungsanlage einzuspielen. Eine Verteilung in die Fahrzeuge ist nicht nötig.

Aus der Auswertung des Messwerts des Sensors des zweiten Fahrzeugs ist somit der momentane Zustand des ersten autonomen Fahrzeugs bekannt. Der momentane Zustand des ersten autonomen Fahrzeugs kann einen Zustand anzeigen, der einen weiteren Betrieb des ersten autonomen Fahrzeugs erlaubt oder auch nicht. Mit anderen Worten: Der momentane Zustand des ersten autonomen Fahrzeugs zeigt an, ob sich das Fahrzeug in einem Betriebszustand befindet oder nicht. Wenn der momentane Fahrzeugzustand von einem Sollzustand abweicht, umfasst das Verfahren daher ein Senden einer ersten Nachricht an das erste autonome Fahrzeug. Die erste Nachricht enthält dabei einen Befehl, sich autonom zu einem Service-Ort zu bewegen. Der Sollzustand zeigt dabei einen Zustand an, der einen weiteren Betrieb des Fahrzeugs erlaubt bzw. einem Qualitätsanspruch eines Anbieters des Fahrzeugs genügt. Mit anderen Worten: Das Fahrzeug befindet sich im Betriebszustand, wenn sein momentaner Zustand dem Sollzustand entspricht. Weicht der momentane Fahrzeugzustand nunmehr davon ab, weil z.B. das Fahrzeug zu stark verdreckt ist oder ein Bauteil des Fahrzeugs verschlissen bzw. defekt ist, kann sich das erste autonome Fahrzeug autonom im öffentlichen Verkehr zu dem Service-Ort bewegen, um dort näher untersucht bzw. wieder in den Sollzustand versetzt zu werden. Bei dem Service-Ort kann es sich z.B. um eine Werkstatt, eine Autowaschanlage oder einen sonstigen Ort, an dem das erste autonome Fahrzeug untersucht bzw. in den Sollzustand versetzt werden kann (z.B. reinigen oder reparieren). Die Arbeiten an dem ersten autonomen Fahrzeug können dabei sowohl von einer Service-Kraft (d.h. einem Menschen) als auch von einer automatisch arbeitenden Einrichtung ausgeführt werden (z.B. automatische Reinigung). Somit kann nach Erkennen einer Abweichung vom Sollzustand eine Instandsetzung des ersten autonomen Fahrzeugs veranlasst werden.

Gemäß einigen Ausführungsbeispielen der vorliegenden Erfindung ist der Messwert des Sensors des zweiten Fahrzeugs eine Aufnahme einer Kamera (z.B. ein statisches Bild oder eine Sequenz bewegter Bilder). Kameras sind in vielen Fahrzeugen mit Fahrassistenzsystemen bzw. Fahrzeugen mit autonomen Fahrsystemen bereits verbaut. Somit kann das erfindungsgemäße Verfahren auf bereits im zweiten Fahrzeug vorhandene Hardware zurückgreifen. Der Einbau weiterer Hardware in das zweite Fahrzeug kann somit vermieden werden. Lediglich eine Aktualisierung der Fahrzeugsoftware ist nötig. Somit können Kosten vermieden werden.

In einigen Ausführungsbeispielen der vorliegenden Erfindung basiert das Bestimmen des momentanen Zustands des ersten autonomen Fahrzeugs ferner auf einem Messwert eines Sensors eines dritten Fahrzeugs. Mit anderen Worten: Sensormesswerte mehrerer Fahrzeuge können für die Bestimmung des momentanen Zustands des ersten autonomen Fahrzeugs herangezogen werden. Handelt es sich bei dem Messwert z.B. um die Aufnahme einer Kamera, kann es unter anderem vorkommen, dass das zweite Fahrzeug nur eine Aufnahme der linken Fahrzeugseite macht. Um den momentanen Zustand des ersten autonomen Fahrzeugs besser Bestimmen zu können kann nun z.B. ferner eine Aufnahme der rechten Fahrzeugseite des ersten autonomen Fahrzeugs durch das dritte Fahrzeug herangezogen werden. Auch können zusätzliche Aufnahmen weiterer Fahrzeuge von z.B. dem Heck oder der Front des ersten autonomen Fahrzeugs für die Bestimmung des momentanen Zustands des ersten autonomen Fahrzeugs herangezogen werden. Auch können manche Fahrzeugteile redundant, d.h. mehrfach, in den Aufnahmen des ersten autonomen Fahrzeugs vorkommen, wodurch eine verbesserte Analyse dieser Fahrzeugteile aufgrund der besseren Datenlage ermöglicht werden kann.

Gemäß einigen Ausführungsbeispielen der vorliegenden Erfindung umfasst das Verfahren ferner ein Bestimmen eines Service-Zeitpunkts basierend auf einer geplanten zukünftigen Verwendung des ersten autonomen Fahrzeugs. Die erste Nachricht umfasst dabei Informationen über den Service-Zeitpunkt. Bei der geplanten zukünftigen Verwendung des ersten autonomen Fahrzeugs kann es sich z.B. um bereits geplante Fahrten des ersten autonomen Fahrzeugs handeln. Beispielsweise bei fahrerlosen Taxen (welche auch unter der Bezeichnung Roboter-Taxen bekannt sind) können bereits zukünftige Fahrten dieses Fahrzeugs geplant sein. Wird die geplante zukünftige Verwendung des ersten autonomen Fahrzeugs in die Bestimmung des Service-Zeitpunkts mit einbezogen, kann sichergestellt werden, dass das erste autonome Fahrzeug zum einen in den Sollzustand versetzt wird und zum anderen die zukünftige Verwendung des ersten autonomen Fahrzeugs wie geplant möglich ist. Bezogen auf das obige Bespiel eines fahrerlosen Taxis kann der Service-Zeitpunkt z.B. zwischen zwei geplante Fahrten gelegt oder auf einen Zeitpunkt nach Beendigung aller bereits geplanten Fahrten gelegt werden. Durch die Informationen über den Service-Zeitpunkt in der ersten Nachricht kann sich das erste autonome Fahrzeug z.B. selbst eine Route berechnen, um sich pünktlich von seiner momentanen oder einer künftigen Position zu dem Service-Ort zu bewegen.

In einigen Ausführungsbeispielen der vorliegenden Erfindung ist der Service-Ort eine Service-Station, d.h. ein Betriebsgelände, an dem eine oder mehrere Service-Dienstleistungen für das erste autonome Fahrzeug angeboten bzw. durchgeführt werden. Bei der Service-Station kann es sich z.B. um eine Werkstatt, eine Tankstelle oder eine Autowaschanlage handeln. Dabei umfasst das erfindungsgemäße Verfahren ferner ein Auswählen der Service-Station aus einer Mehrzahl an Service-Stationen basierend auf einer Position des ersten autonomen Fahrzeugs. Die Position des ersten autonomen Fahrzeugs kann z.B. eine momentane Position des ersten autonomen Fahrzeugs sein und beispielsweise mittels eines globalen Navigationssatellitensystems wie etwa Global Positioning System (GPS), Galileo, GLObal Navigation Satellite System (GLONASS) oder Beidou bestimmt werden. Die Position des ersten autonomen Fahrzeugs kann aber auch eine zukünftige Position des ersten autonomen Fahrzeugs sein und z.B. aus einer geplanten zukünftigen Verwendung des ersten autonomen Fahrzeugs bekannt sein (z.B. ein Zielpunkt einer geplanten zukünftigen Fahrt). Durch das Auswählen der Service-Station auf Basis der Position des ersten autonomen Fahrzeugs können lange Wege zwischen Fahrzeug und Service-Station vermieden werden. Entsprechend kann innerhalb kurzer Zeit mit der Arbeit am ersten autonomen Fahrzeug begonnen werden.

Gemäß einigen Ausführungsbeispielen der vorliegenden Erfindung ist auch das zweite Fahrzeug ein autonomes Fahrzeug. Das heißt, auch das zweite Fahrzeug kann sich autonom im öffentlichen Straßenverkehr bewegen. Dabei umfasst das erfindungsgemäße Verfahren ferner ein Bestimmen einer Fahrttrajektorie für das zweite autonome Fahrzeug basierend auf einer Position des ersten autonomen Fahrzeugs, wobei die Position des ersten autonomen Fahrzeugs relativ zu der Fahrttrajektorie einem vorgegebenen Gütekriterium genügt. Ferner umfasst das Verfahren ein Senden einer vierten Nachricht an das zweite autonome Fahrzeug, wobei die vierte Nachricht Informationen über die Fahrttrajektorie sowie einen Befehl, sich entlang der Fahrttrajektorie zu bewegen und dabei aufgezeichnete Messwerte des Sensors an die Datenverarbeitungsanlage zu senden, enthält. Bei der Position des ersten autonomen Fahrzeugs kann es sich wiederum um die momentane Position des Fahrzeugs als auch um eine zukünftige Position des ersten autonomen Fahrzeugs handeln. Bei der Fahrtrajektorie handelt es sich um eine von dem zweiten autonomen Fahrzeug abzufahrende Bahnkurve, d.h. einen zeitabhängigen Verlauf der Position des zweiten autonomen Fahrzeugs. Durch das Bestimmen der Fahrttrajektorie für das zweite autonome Fahrzeug kann eine Güte der Vermessung des ersten autonomen Fahrzeugs durch das zweite autonome Fahrzeug vorgegeben werden. So kann z.B. eine Ausrichtung des zweiten autonomen Fahrzeugs relativ zu dem ersten autonomen Fahrzeug für die Vermessung des ersten autonomen Fahrzeugs sichergestellt werden. Bei dem Gütekriterium handelt es sich um einen Parameter, der die Qualität und Vollständigkeit der Messwerte des Sensors des zweiten autonomen Fahrzeugs gewährleistet. Handelt es sich z.B. um Bildaufnahmen von dem ersten autonomen Fahrzeug durch das zweite autonome Fahrzeug kann beispielsweise durch die Fahrttrajektorie gemäß Gütekriterium ein geeigneter Abstand zwischen den Fahrzeugen oder eine vollständige Sichtbarkeit des ersten autonomen Fahrzeugs in der Bildaufnahme sichergestellt werden. Jedoch können auch externe Parameter wie etwa die Beleuchtungssituation in dem Gütekriterium berücksichtigt werden. So kann die Fahrtrajektorie z.B. eine bestimmte relative Ausrichtung zu einer Stellung der Sonne aufweisen, oder ein bestimmter Zeitpunkt für das Abfahren der Bahnkurve bestimmt werden. Derart kann z.B. eine Güte einer Beleuchtung der aufzunehmenden Szenerie gewährleistet werden. Das Senden der so gewonnen Sensormesswerte an die Datenverarbeitungsanlage kann z.B. über ein zellulares Netzwerk oder ein lokales drahtloses Netzwerk (z.B. mittels Übertragung gemäß dem Standard IEEE 802.11 p an eine entsprechende Verkehrsinfrastruktur) erfolgen. Durch die vierte Nachricht kann das zweite autonome Fahrzeug somit gezielt relativ zu dem ersten autonomen Fahrzeug bewegt werden, um eine qualitativ ausreichende bzw. zufriedenstellende Vermessung des ersten autonomen Fahrzeugs zu ermöglichen.

In einigen Ausführungsbeispielen der vorliegenden Erfindung kann das Verfahren im Umkehrschluss auch ein Bestimmen einer Fahrttrajektorie für das erste autonome Fahrzeug basierend auf einer Position des zweiten Fahrzeugs umfassen, wobei die Position des zweiten Fahrzeugs relativ zu der Fahrttrajektorie einem vorgegebenen Gütekriterium genügt. Ferner kann das Verfahren dann ein Senden einer Nachricht an das erste autonome Fahrzeug umfassen, wobei die Nachricht einen Befehl, sich entlang der Fahrttrajektorie zu bewegen, enthält. Somit kann das erste autonome Fahrzeug auf einer definierten Trajektorie relativ zu dem zweiten Fahrzeug bewegt werden. Dies kann z.B. vorteilhaft sein, wenn das zweite Fahrzeug geparkt ist. Auch können sich derart beide Fahrzeuge gleichzeitig auf definierten Fahrttrajektorien zueinander bewegen. Derart kann durch eine gezielte Bewegung des ersten autonomen Fahrzeugs relativ zu dem zweiten Fahrzeug eine Güte der Vermessung des ersten autonomen Fahrzeugs durch das zweite Fahrzeug gewährleistet werden.

Gemäß einigen Ausführungsbeispielen der vorliegenden Erfindung ist das zweite Fahrzeug wiederum ein autonomes Fahrzeug. Dabei umfasst das erfindungsgemäße Verfahren ferner ein Bestimmen einer Fahrtroute für das zweite autonome Fahrzeug basierend auf einer Position des ersten autonomen Fahrzeugs, wobei die Fahrtroute an der Position des ersten autonomen Fahrzeugs vorbeiführt. Bei der Position des ersten autonomen Fahrzeugs kann es sich wiederum um eine momentane oder eine zukünftige Positionen des ersten autonomen Fahrzeugs handeln. Bei der Fahrtroute handelt es sich um einen vorgegebenen Weg zwischen zwei Positionen. Im Gegensatz zur Fahrttrajektorie handelt es sich bei der Fahrtroute jedoch nicht um eine abzufahrende Bahnkurve, d.h. nicht um einen zeitabhängigen Verlauf der Position des zweiten autonomen Fahrzeugs, sondern um eine Anweisung sich selbständig entlang einer Anzahl vorgegebener Wegpunkte von einem Startposition zu einer Zielposition zu bewegen. Beispielsweise kann die Fahrtroute einen Weg von einer Startposition zu einer Zielposition vorgeben, der entlang einer bestimmten Straße führt, in der sich das erste autonome Fahrzeug befindet. Die Wegfindung entlang der Fahrtroute obliegt dem zweiten autonomen Fahrzeug jedoch selbst. Daher umfasst das erfindungsgemäße Verfahren ferner ein Senden einer fünften Nachricht an das zweite autonome Fahrzeug, wobei die fünfte Nachricht Informationen über die Fahrtroute sowie einen Befehl, sich autonom entlang der Fahrtroute zu bewegen und in einem vorgegebenen Umkreis um die Position des ersten autonomen Fahrzeugs aufgezeichnete Messwerte des Sensors an die Datenverarbeitungsanlage zu senden, enthält. Derart kann eine gezielte Vorbeifahrt des zweiten autonomen Fahrzeugs an dem ersten autonomen Fahrzeug gesteuert werden, um gezielt das erste autonome Fahrzeug durch das zweite autonome Fahrzeug vermessen zu lassen.

In einigen Ausführungsbeispielen der vorliegenden Erfindung kann das Verfahren daher im Umkehrschluss auch ein Bestimmen einer Fahrtroute für das erste autonome Fahrzeug basierend auf einer Position des zweiten Fahrzeugs umfassen, wobei die Fahrtroute an der Position des zweiten Fahrzeugs vorbeiführt. Ferner kann das Verfahren dabei ein Senden einer sechsten Nachricht an das erste autonome Fahrzeug umfassen, wobei die sechste Nachricht Informationen über die Fahrtroute sowie einen Befehl, sich autonom entlang der Fahrtroute zu bewegen, enthält. Derart kann eine gezielte Vorbeifahrt des ersten autonomen Fahrzeugs an dem zweiten Fahrzeug organisiert werden. Dies kann z.B. vorteilhaft sein, wenn das zweite Fahrzeug geparkt ist. Auch können beide Fahrzeuge zu einer Vorbeifahrt aneinander befehligt werden. Das zweite Fahrzeug kann dann das vorbeifahrende erste autonome Fahrzeug vermessen (z.B. eine oder mehrere Bildaufnahmen machen). Dazu kann an das zweite Fahrzeug z.B. eine siebte Nachricht mit dem Befehl, aufgezeichnete Messwerte des Sensors an die Datenverarbeitungsanlage zu senden, gesendet werden, sobald sich das erste autonome Fahrzeug entlang der Fahrtroute in einem vorgegebenen Umkreis um die Position des zweiten Fahrzeugs bewegt. Somit kann eine gezielte Vermessung des ersten autonomen Fahrzeugs durch das zweite Fahrzeug gesteuert werden.

Gemäß einigen Ausführungsbeispielen der vorliegenden Erfindung umfasst das Verfahren ferner ein Zuordnen eines empfangenen Messwerts des Sensors des zweiten Fahrzeugs zu dem ersten autonomen Fahrzeug. Vielfach ist dem zweiten Fahrzeug nicht bekannt, welches weitere Fahrzeug es vermisst bzw. aufnimmt. Um einen Hard- und Software-Aufwand für die Durchführung des erfindungsgemäßen Verfahrens im Fahrzeug gering zu halten, ist daher eine Zuordnung in der Datenverarbeitungsanlage vorteilhaft. So kann die Zuordnung des empfangenen Messwerts zu dem ersten autonomen Fahrzeug bei einer Bildaufnahme z.B. über eine in der Bildaufnahme enthaltenes Kennzeichen des ersten autonomen Fahrzeugs erfolgen. Alternativ kann die Zuordnung des empfangenen Messwerts zu dem ersten autonomen Fahrzeug z.B. auch mittels einer bekannten Positionen des ersten autonomen Fahrzeugs und des zweiten Fahrzeugs zum Zeitpunkt der Erzeugung des Messwerts durch den Sensor erfolgen. Auf diese Weise können auch von Sensoren verschiedener Fahrzeuge erzeugte Messwerte dem ersten autonomen Fahrzeug zugeordnet werden. Somit kann eine breitere Datenbasis für die Bestimmung des momentanen Zustands des ersten autonomen Fahrzeugs geschaffen werden.

Um die Instandsetzung von autonomen Fahrzeugen effizient zu gestalten, betrifft die vorliegende Erfindung in einem weiteren Aspekt ein Verfahren für eine Datenverarbeitungsanlage zum Verwalten einer Mehrzahl autonomer Fahrzeuge. Dabei umfasst das Verfahren ein Empfangen von Informationen über eine Abweichung eines momentanen Fahrzeugzustands von einem Sollzustand für zumindest einen Teil der Mehrzahl autonomer Fahrzeuge. Somit werden zumindest für eine Teilmenge der Mehrzahl autonomer Fahrzeuge Informationen über Abweichungen ihrer jeweiligen momentanen Fahrzeugzustände von jeweiligen Sollzuständen erhalten. Das Verfahren umfasst ferner ein Bestimmen einer Bearbeitungsreihenfolge in einer Service-Station auf Basis zumindest eines Auswahlkriteriums und den Informationen über die Abweichungen der momentanen Fahrzeugzustände vom Sollzustand. Somit kann eine Priorisierung der Instandsetzung der Mehrzahl an Fahrzeug ermöglicht werden. Das Auswahlkriterium kann z.B. eine Priorisierung der Bearbeitung nach einer Schwere der Abweichung des momentanen Zustands des Fahrzeugs vom Sollzustand umfassen. So können z.B. verschiedene Abweichungen vom Sollzustand in unterschiedliche Klassen für die Bearbeitungspriorität eingeteilt werden, und entsprechend Fahrzeug in einer Klasse gegenüber Fahrzeugen in einer anderen Klasse priorisiert bearbeitet werden. Zudem umfasst das Verfahren ein Senden einer Nachricht an zumindest eines der Mehrzahl autonomer Fahrzeuge, wobei die Nachricht Informationen über die Bearbeitungsreihenfolge durch die Service-Station umfasst. Die Nachricht kann beispielsweise mittels eines zellularen Netzwerks oder eines lokalen drahtlosen Netzwerks (z.B. gemäß dem Standard IEEE 802.11 p) gesendet werden. Mittels der in der Nachricht enthaltenen Informationen kann das eine autonome Fahrzeug z.B. einen Service-Zeitpunkt für sich erfahren. Entsprechend kann sich das autonome Fahrzeug autonom zu der Service-Station bewegen, um rechtzeitig zu dem Service-Zeitpunkt dort anzukommen. Wenn es sich bei dem einen autonomen Fahrzeug z.B. um ein fahrerloses Taxi handelt, kann es beispielsweise entscheiden, ob es weitere Fahrtbuchungen annehmen kann bzw. in welchem Gebiet es weitere Fahrtbuchungen annehmen kann. Somit kann eine an die Abweichungen ihrer jeweiligen momentanen Fahrzeugzustände von jeweiligen Sollzuständen angepasste Bearbeitung der autonomen Fahrzeuge durch die Service-Station erfolgen. Eine Verweildauer der autonomen Fahrzeuge an der Service-Station, während derer sie nicht für die reguläre Nutzung zur Verfügung stehen, kann somit minimiert werden. Auch kann die Service-Station den nötigen Arbeitsaufwand sowie die nötige Logistik besser planen. Aufgrund der Übermittlung der Informationen über die Abweichung des momentanen Fahrzeugzustands vom Sollzustand für zumindest einen Teil der Mehrzahl autonomer Fahrzeuge kann die Service-Station z.B. bereits vorab (wahrscheinlich) benötigte Teile für die Instandsetzung der autonomen Fahrzeug bestellen. Somit kann eine Verzögerung der Instandsetzung aufgrund fehlender Teile als auch die unnötige Bevorratung der Service-Station mit Teilen vermieden werden. Eine Effizienz der Instandsetzung für die Mehrzahl autonomer Fahrzeuge kann somit gesteigert werden.

In einigen Ausführungsbeispielen der vorliegenden Erfindung kann das Bestimmen der Bearbeitungsreihenfolge in der Service-Station daher ferner auch auf Informationen über eine geplante zukünftige Verwendung des Teils der Mehrzahl autonomer Fahrzeuge basieren. Somit kann bei der Bestimmung der Bearbeitungsreihenfolge auch die bereits geplante zukünftige Verwendung der autonomen Fahrzeuge berücksichtigt werden. Somit können autonome Fahrzeuge, für welche zu einem bestimmten Zeitpunkt keine Verwendung geplant ist, zu diesem Zeitpunkt Instandgesetzt werden, während Fahrzeuge, für welche zu diesem Zeitpunkt eine Verwendung geplant ist, zu Zeitpunkten Instandgesetzt werden können, an denen (noch) keine Verwendung geplant ist. Somit kann eine Nutzungsmöglichkeit der autonomen Fahrzeuge maximiert werden.

Es versteht sich von selbst, dass Ausführungsbeispiele der vorliegenden Erfindung auch ein Programm mit einem Programmcode zum Durchführen eines der hierin beschriebenen Verfahren umfasst, wenn der Programmcode auf einer Datenverarbeitungsanlage (z.B. einer Computer-Cloud, einem Computer, einem Prozessor oder einer programmierbaren Hardwarekomponente) abläuft bzw. dort ausgeführt wird.

Ausführungsbeispiele der vorliegenden Erfindung werden nachfolgend, Bezug nehmend auf die beigefügten Figuren, näher erläutert. Es zeigen:
Fig. 1 zeigt ein Flussdiagram eines Ausführungsbeispiels eines Verfahrens für eine Datenverarbeitungsanlage zur Erhaltung eines Betriebszustands eines ersten autonomen Fahrzeugs;
Fig. 2 zeigt ein Ausführungsbeispiel einer Bestimmung eines momentanen Zustands eines ersten autonomen Fahrzeugs; und
Fig. 3 zeigt ein Flussdiagram eines Ausführungsbeispiels eines Verfahrens für eine Datenverarbeitungsanlage zum Verwalten einer Mehrzahl autonomer Fahrzeuge.

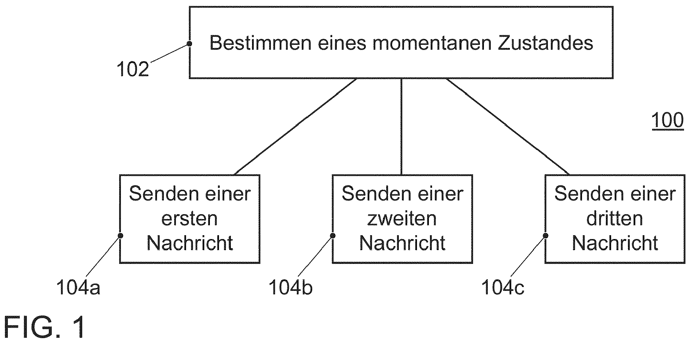

Fig. 1 zeigt ein Verfahren 100 für eine Datenverarbeitungsanlage zur Erhaltung eines Betriebszustands eines ersten autonomen Fahrzeugs. Das Verfahren 100 umfasst dabei Bestimmen 102 eines momentanen Zustands des ersten autonomen Fahrzeugs aus einem empfangenen Messwert eines Sensors eines zweiten Fahrzeugs. Wenn der momentane Zustand des ersten autonomen Fahrzeugs von einem Sollzustand abweicht, umfasst das Verfahren 100 ein Senden 104a einer ersten Nachricht an das erste autonome Fahrzeug. Dabei enthält die erste Nachricht einen Befehl, sich autonom zu einem Service-Ort zu bewegen. Alternativ umfasst das Verfahren 100 ein Senden 104b einer zweiten Nachricht an einen Verantwortlichen für das erste autonome Fahrzeug. Die zweite Nachricht umfasst dabei Informationen über die Abweichung des momentanen Zustands des ersten autonomen Fahrzeugs von dem Sollzustand. Als weitere Alternative umfasst das Verfahren 100 ein Senden 104c einer dritten Nachricht an eine Servicekraft, wobei die dritte Nachricht einen Auftrag an die Servicekraft enthält, das Fahrzeug in den Sollzustand zu versetzten.

In der ersten Alternative ermöglicht das Verfahren 100 dem ersten autonomen Fahrzeug sich autonom im öffentlichen Verkehr zu dem Service-Ort bewegen, um dort näher untersucht bzw. wieder in den Sollzustand versetzt zu werden. Durch das alternative Senden der zweiten Nachricht kann durch das Verfahren 100 dem Verantwortlichen der Zustand des ersten autonomen Fahrzeugs mitgeteilt werden. Dieser kann entsprechend seinen Wünschen auf den momentanen Fahrzeugzustand reagieren. Durch das alternative Senden der dritten Nachricht an die Servicekraft kann die Abweichung des momentanen Fahrzeugzustands vom Sollzustand durch diese behoben werden.

Weitere Details und Aspekte des Verfahrens sind vorangehend in Zusammenhang mit einem oder mehreren Ausführungsbeispielen beschrieben. Das Verfahren kann eines oder mehrere optionale Merkmale gemäß einem oder mehreren der vorbeschriebenen Ausführungsbeispiele umfassen.

Beispielsweise kann die Kamera eines Fahrzeugs mit Unterstützung eines Back-Ends (z. B. eines Flottenbetreibers oder eines Mobilitätsanbieters) zur Beurteilung des Verschmutzungsgrades genutzt werden. Ebenso kann auch eine Beurteilung nach dem Kriterium Beschädigung erfolgen (z. B. Parkschäden wie Kratzer und Beulen). Mit anderen Worten: Die Fahrzeuge einer Flotte (z. B. eines Taxi-Unternehmens) oder die an ein gemeinsames Back-End angebundenen Fahrzeuge werden dazu eingesetzt, sich gegenseitig zu beurteilen. Beispielsweise können zwei aneinander vorbei fahrende Fahrzeuge mit ihren Kameras geeignete Bilder aufnehmen, die von Bildverarbeitungsalgorithmen entsprechend ausgewertet werden. Es können Abweichungen von einem Sollzustand gesucht und entsprechend eines Kriterienkatalogs eingeordnet werden. Entsprechend des Ergebnisses können Reinigungsmaßnahmen bzw. Reparaturmaßnahmen eingeleitet und/oder die nächste Beurteilung geplant werden.

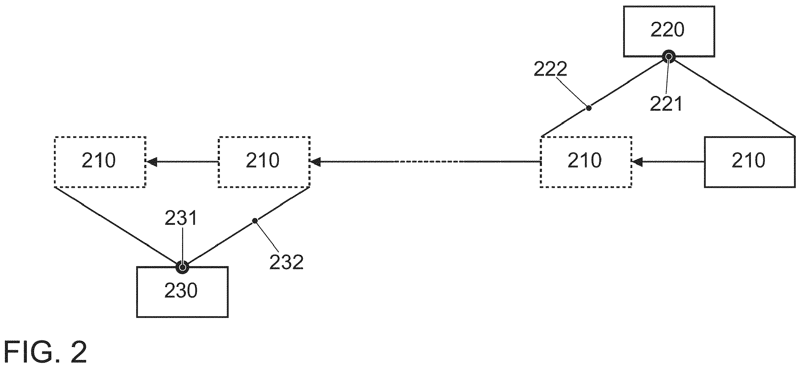

Da bei einer Vorbeifahrt gewöhnlich nicht alle Seiten eines Fahrzeugs von dem jeweils anderen Fahrzeug gesehen bzw. aufgenommen werden können, kann das Back-End die von verschiedenen Fahrzeugen aufgenommenen Bilder einem zu beurteilenden Fahrzeug zuzuordnen. Anschließend erfolgt die Bildauswertung und Beurteilung durch das Back-End. Hierbei kann z.B. auch die Aktualität der Aufnahmen berücksichtigt werden. Eine solche Situation ist in Fig. 2 dargestellt.

Das erste autonome Fahrzeug 210 bewegt sich - wie durch die Pfeile und die gestrichelte Darstellung angedeutet - von rechts nach links entlang einer Straße. Dabei passiert das erste autonome Fahrzeug 210 zunächst das zweite (autonome oder nicht-autonome) Fahrzeug 220. Das Fahrzeug 220 kann z.B. am Straßenrand geparkt sein, oder sich auf einer zweiten Fahrspur der Straße mit oder entgegen der Fahrtrichtung des ersten autonomen Fahrzeugs 210 bewegen. Das zweite Fahrzeug ist mit einem optischen Sensor, nämlich einer Kamera 221 ausgestattet. Bei der Kamera kann es sich insbesondere um eine bereits im Rahmen eines Fahrassistenzsystems oder eines autonomen Fahrsystems verbaute Kamera handeln. Die Kamera hat dabei einen Öffnungswinkel 222, d.h. die Kamera 221 kann Aufnahmen von Objekten innerhalb des Öffnungswinkels 222 machen. Bei der Vorbeifahrt des ersten autonomen Fahrzeugs 210 an dem zweiten Fahrzeug 220 macht die Kamera 221 nun mehrere Aufnahmen des ersten autonomen Fahrzeugs 210. Wie in Fig. 2 angedeutet, kann die Kamera 221 z.B. Aufnahmen der rechten Seite sowie des Hecks des ersten autonomen Fahrzeugs 210 machen.

Das zweite Fahrzeug 220 sendet die Aufnahmen anschließen an eine zentrale Datenverarbeitungsanlage (Back-End), wo die Aufnahmen zunächst dem ersten autonomen Fahrzeug 210 zugeordnet (z.B. aufgrund der Kenntnis der Position des ersten autonomen Fahrzeugs 210) und anschließend beurteilet werden.

Im Verlauf seiner Fahrt entlang der Straße bewegt sich das erste autonome Fahrzeug 210 zu einem späteren Zeitpunkt auch am dritten (autonomen oder nicht-autonomen) Fahrzeug 230 vorbei. Das dritte Fahrzeug 230 ist ebenso mit einer Kamera 231 ausgestattet, welche einen Öffnungswinkel 232 aufweist. Bei der Vorbeifahrt des ersten autonomen Fahrzeugs 210 an dem dritten Fahrzeug 230 macht die Kamera 231 nun mehrere Aufnahmen des ersten autonomen Fahrzeugs 210. Wie in Fig. 2 angedeutet, kann die Kamera 231 z.B. Aufnahmen der linken Seite sowie der Front des ersten autonomen Fahrzeugs 210 machen.

Auch das dritte Fahrzeug 230 sendet die Aufnahmen anschließen an das Back-End, wo die Aufnahmen zunächst dem ersten autonomen Fahrzeug 210 zugeordnet und anschließend beurteilet werden. Die Beurteilung des ersten autonomen Fahrzeugs 210, d.h. die Bestimmung, ob eine Abweichung des momentanen Zustands des ersten autonomen Fahrzeugs 210 von einem Sollzustand vorliegt, erfolgt somit auf Basis der Aufnahmen mehrerer Fahrzeuge. Somit kann das Backend z.B. einen Verschmutzungsgrad des ersten autonomen Fahrzeugs 210 oder eine Beschädigung am ersten autonomen Fahrzeug 210 erkennen.

Entsprechend dem Verfahren 100 bzw. einem oder mehreren der vorbeschriebenen Ausführungsbeispiele kann das Back-End nun z.B. einen Verantwortlichen für das erste autonome Fahrzeug 210 informieren, der das erste autonome Fahrzeug 210 zu einem Service-Ort befehligen oder eine Servicekraft mit der Instandsetzung bzw. Wartung des ersten autonomen Fahrzeugs 210 beauftragen kann.

Das Back-End kann zur Verbesserung der Prozesssicherheit auch gezielte Aufforderungen zu Fahrmanöver an ein Fahrzeug senden, damit die Bildqualität und Vollständigkeit der Aufnahmen sichergestellt ist (geeigneter Abstand, vollständige Sichtbarkeit, Beleuchtung der aufzunehmenden Szene). Beispielsweise kann für das erste autonome Fahrzeug 210 eine Fahrttrajektorie relativ zu dem zweiten Fahrzeug 220 oder dem dritten Fahrzeug 230 bestimmt werden gemäß einem oder mehreren der vorbeschriebenen Ausführungsbeispiele. Auch kann das Back-End die Vorgänge zur Beurteilung der Verschmutzung planen, d.h. neben zufälligen Vorbeifahrten, die sich aus den zu fahrenden Routen ergeben, können auch gezielt Vorbeifahrten so organisiert werden, dass ein Fahrzeug gleichzeitig von mehreren anderen Fahrzeugen gesehen wird und sofort eine Komplettbeurteilung möglich ist. Die Vorbeifahrt des ersten autonomen Fahrzeugs 210 an dem zweiten Fahrzeug 220 und dem dritten Fahrzeug 230 kann also nicht nur zufällig geschehen. Vielmehr kann das Back-End auch eine Fahrtroute für das erste autonome Fahrzeug 210 bestimmen, welche das erste autonome Fahrzeug 210 an dem zweiten Fahrzeug 220 und dem dritten Fahrzeug 230 vorbeiführt.

Wie bereits in mehreren der vorbeschriebenen Ausführungsbeispiele angedeutet, kann auch das die Aufnahmen machende Fahrzeug gezielt von dem Back-End zum Abfahren einer Fahrttrajektorie oder einer Route entlang einer Position des zu beurteilenden Fahrzeugs befehligt werden. Wenn das zu beurteilende Fahrzeug z.B. ein fahrerloses Taxis ist, welches gerade an einem Taxistand auf einen Fahrgast wartet, kann die Vorbeifahrt eines oder mehrerer Fahrzeuge an diesem durch das Back-End veranlasst werden, so dass ausreichend Aufnahmen für eine Beurteilung zur Verfügung stehen.

Das Back-End kann somit eine Unterstützung der Fahrzeugt bei der gegenseitigen Aufnahme von Bildern (z.B. Fotos oder bewegte Bilder), eine Zuordnung der Bilder zu den einzelnen Fahrzeugen, eine Beurteilung des Verschmutzungsgrades, eine Verwaltung der Bilder und Beurteilungsergebnisse, eine Planung des Aufnehmens der Beurteilungsbilder, eine Planung der Reinigung in Abstimmung mit dem Einsatzplan bzw. Fahrplan der einzelnen Fahrzeuge, eine Buchung der Reinigung (inklusive Zeiten) in einer Waschstraße, bevorzugt in einer Waschstraße für autonome Fahrzeug, als auch eine Überwachung der Fahrzeugwäsche (z. B. Anmeldung an der Waschstraße durch das Fahrzeug Vorort, Einreihen in Warteschlange, Beginn der Wäsche, Ende der Wäsche) ermöglichen. Im Falle der Detektion von Beschädigungen würde statt der Planung der Reinigung z.B. eine Planung der Begutachtung des Schadens in der Werkstatt mit dem Ziel der anschließenden Entscheidung zur weiteren Vorgehensweise (z. B. Ausbeulen, Lackreparatur, Teilereparatur) erfolgen.

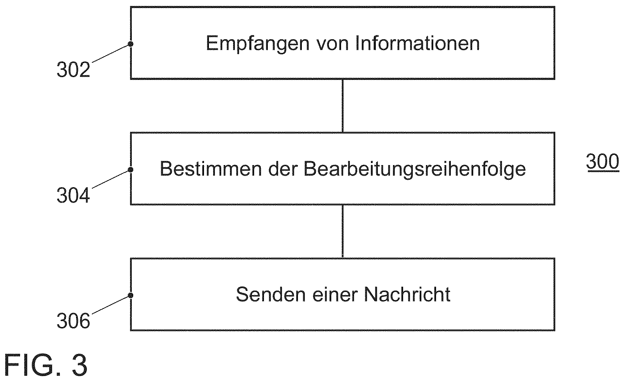

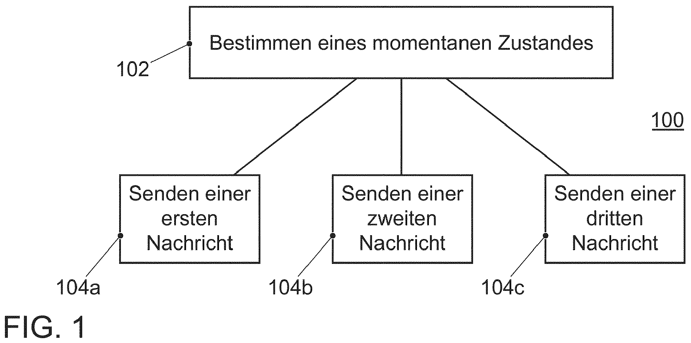

Fig. 3 zeigt dazu nun im Weiteren ein Verfahren 300 für eine Datenverarbeitungsanlage zum Verwalten einer Mehrzahl autonomer Fahrzeuge. Das Verfahren 300 umfasst ein Empfangen 302 von Informationen über eine Abweichung eines momentanen Fahrzeugzustands von einem Sollzustand für zumindest einen Teil der Mehrzahl autonomer Fahrzeuge. Ferner umfasst das Verfahren 300 ein Bestimmen 304 einer Bearbeitungsreihenfolge in einer Service-Station auf Basis zumindest eines Auswahlkriteriums und den Informationen über die Abweichungen der momentanen Fahrzeugzustände vom Sollzustand. Auch umfasst das Verfahren 300 ein Senden 306 einer Nachricht an zumindest eines der Mehrzahl autonomer Fahrzeuge, wobei die Nachricht Informationen über die Bearbeitungsreihenfolge durch die Service-Station umfasst.

Mittels der in der Nachricht enthaltenen Informationen kann das eine autonome Fahrzeug z.B. einen Service-Zeitpunkt für sich erfahren. Entsprechend kann sich das autonome Fahrzeug autonom zu der Service-Station bewegen, um rechtzeitig zu dem Service-Zeitpunkt dort anzukommen. Eine Verweildauer der autonomen Fahrzeuge an der Service-Station, während derer sie nicht für die reguläre Nutzung zur Verfügung stehen, kann somit minimiert werden. Auch kann die Service-Station den nötigen Arbeitsaufwand sowie die nötige Logistik besser planen. Somit kann eine Verzögerung der Instandsetzung aufgrund fehlender Teile als auch die unnötige Bevorratung der Service-Station mit Teilen vermieden werden. Eine Effizienz der Instandsetzung für die Mehrzahl autonomer Fahrzeuge kann somit gesteigert werden.

Weitere Details und Aspekte des Verfahrens sind vorangehend in Zusammenhang mit einem oder mehreren Ausführungsbeispielen beschrieben. Das Verfahren kann eines oder mehrere optionale Merkmale gemäß einem oder mehreren der vorbeschriebenen Ausführungsbeispiele umfassen.

### Bezugszeichenliste

- 100: Verfahren für eine Datenverarbeitungsanlage zur Erhaltung eines Betriebszustands eines ersten autonomen Fahrzeugs
- 102: Bestimmen eines momentanen Zustands des ersten autonomen Fahrzeugs
- 104a: Senden einer ersten Nachricht an das erste autonome Fahrzeug
- 104b: Senden einer zweiten Nachricht an einen Verantwortlichen für das erste autonome Fahrzeug
- 104c: Senden einer dritten Nachricht an eine Servicekraft
- 210: erstes autonomes Fahrzeug
- 220: zweites Fahrzeug
- 221: Kamera
- 222: Öffnungswinkel der Kamera
- 230: drittes Fahrzeug
- 231: Kamera
- 232: Öffnungswinkel der Kamera
- 300: Verfahren für eine Datenverarbeitungsanlage zum Verwalten einer Mehrzahl autonomer Fahrzeuge
- 302: Empfangen von Informationen
- 304: Bestimmen einer Bearbeitungsreihenfolge in einer Service-Station
- 306: Senden einer Nachricht an zumindest eines der Mehrzahl autonomer Fahrzeuge

## Patentansprüche

1. Verfahren (100) für eine zentrale Datenverarbeitungsanlage zur Erhaltung eines Betriebszustands eines ersten autonomen Fahrzeugs, umfassend:
Bestimmen (102) eines momentanen Zustands des ersten autonomen Fahrzeugs aus einem empfangenen Messwert eines Sensors eines zweiten Fahrzeugs; und
wenn der momentane Zustand des ersten autonomen Fahrzeugs von einem Sollzustand abweicht, Senden (104a) einer ersten Nachricht an das erste autonome Fahrzeug, wobei die erste Nachricht einen Befehl enthält, sich autonom zu einem Service-Ort zu bewegen.

2. Verfahren nach Anspruch 1, wobei der Messwert des Sensors des zweiten Fahrzeugs eine Aufnahme einer Kamera ist.

3. Verfahren nach Anspruch 1 oder Anspruch 2, wobei das Bestimmen (102) des momentanen Zustands des ersten autonomen Fahrzeugs ferner auf einem Messwert eines Sensors eines dritten Fahrzeugs basiert.

4. Verfahren nach einem der vorhergehenden Ansprüche, wobei das Verfahren ferner ein Bestimmen eines Service-Zeitpunkts basierend auf einer geplanten zukünftigen Verwendung des ersten autonomen Fahrzeugs umfasst, und wobei die erste Nachricht Informationen über den Service-Zeitpunkt umfasst.

5. Verfahren nach einem der vorhergehenden Ansprüche, wobei der Service-Ort eine Service-Station ist, und wobei das Verfahren ferner ein Auswählen der Service-Station aus einer Mehrzahl an Service-Stationen basierend auf einer Position des ersten autonomen Fahrzeugs umfasst.

6. Verfahren nach einem der vorhergehenden Ansprüche, wobei das zweite Fahrzeug ein autonomes Fahrzeug ist, und wobei das Verfahren ferner Folgendes umfasst:
Bestimmen einer Fahrttrajektorie für das zweite autonome Fahrzeug basierend auf einer Position des ersten autonomen Fahrzeugs, wobei die Position des ersten autonomen Fahrzeugs relativ zu der Fahrttrajektorie einem vorgegebenen Gütekriterium genügt; und
Senden einer vierten Nachricht an das zweite autonome Fahrzeug, wobei die vierte Nachricht Informationen über die Fahrttrajektorie sowie einen Befehl, sich entlang der Fahrttrajektorie zu bewegen und dabei aufgezeichnete Messwerte des Sensors an die Datenverarbeitungsanlage zu senden, enthält.

7. Verfahren nach einem der vorhergehenden Ansprüche, wobei das zweite Fahrzeug ein autonomes Fahrzeug ist, wobei das Verfahren ferner Folgendes umfasst:
Bestimmen einer Fahrtroute für das zweite autonome Fahrzeug basierend auf einer Position des ersten autonomen Fahrzeugs, wobei die Fahrtroute an der Position des ersten autonomen Fahrzeugs vorbeiführt; und
Senden einer fünften Nachricht an das zweite autonome Fahrzeug, wobei die fünfte Nachricht Informationen über die Fahrtroute sowie einen Befehl, sich autonom entlang der Fahrtroute zu bewegen und in einem vorgegebenen Umkreis um die Position des ersten autonomen Fahrzeugs aufgezeichnete Messwerte des Sensors an die Datenverarbeitungsanlage zu senden, enthält.

8. Verfahren nach einem der vorhergehenden Ansprüche, wobei das Verfahren ferner Folgendes umfasst:
Bestimmen einer Fahrtroute für das erste autonome Fahrzeug basierend auf einer Position des zweiten Fahrzeugs, wobei die Fahrtroute an der Position des zweiten Fahrzeugs vorbeiführt;
Senden einer sechsten Nachricht an das erste autonome Fahrzeug, wobei die sechste Nachricht Informationen über die Fahrtroute sowie einen Befehl, sich autonom entlang der Fahrtroute zu bewegen, enthält; und
Senden einer siebten Nachricht an das zweite Fahrzeug, wenn sich das erste autonome Fahrzeug entlang der Fahrtroute in einem vorgegebenen Umkreis um die Position des zweiten Fahrzeugs bewegt, wobei die siebte Nachricht einen Befehl, aufgezeichnete Messwerte des Sensors an die Datenverarbeitungsanlage zu senden, enthält.

9. Verfahren nach einem der vorhergehenden Ansprüche, wobei das Verfahren ferner ein Zuordnen eines empfangenen Messwerts des Sensors des zweiten Fahrzeugs zu dem ersten autonomen Fahrzeug umfasst.

10. Verfahren (300) für eine Datenverarbeitungsanlage zum Verwalten einer Mehrzahl autonomer Fahrzeuge, umfassend:
Empfangen (302) von Informationen über eine Abweichung eines momentanen Fahrzeugzustands von einem Sollzustand für zumindest einen Teil der Mehrzahl autonomer Fahrzeuge;
Bestimmen (304) einer Bearbeitungsreihenfolge in einer Service-Station auf Basis zumindest eines Auswahlkriteriums und den Informationen über die Abweichungen der momentanen Fahrzeugzustände vom Sollzustand; und
Senden (306) einer Nachricht an zumindest eines der Mehrzahl autonomer Fahrzeuge, wobei die Nachricht Informationen über die Bearbeitungsreihenfolge durch die Service-Station umfasst.
